## Europäisches Patentamt
## European Patent Office
## Office européen des brevets

(19)

(11) Numéro de publication: **0 013 656**
**B1**

(12) **FASCICULE DE BREVET EUROPEEN**

(45) Date de publication du fascicule du brevet:
**04.05.83**

(21) Numéro de dépôt: **80430002.8**

(22) Date de dépôt: **10.01.80**

(51) Int. Cl.³: **B 26 B 15/00, A 01 G 3/03**

(54) Sécateur pneumatique à double effet.

(30) Priorité: **12.01.79 FR 7901300**

(43) Date de publication de la demande:
**23.07.80 Bulletin 80/15**

(45) Mention de la délivrance du brevet:
**04.05.83 Bulletin 83/18**

(84) Etats contractants désignés:
**AT CH DE GB IT**

(56) Documents cités:
**FR-A-2 190 346**
**FR-A-2 265 261**
**FR-A-2 321 839**

(73) Titulaire: **Lavijerie, Jacques, 41, Boulevard de la Liberté, F-13001 Marseille (FR)**

(72) Inventeur: **Lavijerie, Jacques, 41, Boulevard de la Liberté, F-13001 Marseille (FR)**

(74) Mandataire: **Marek, Pierre, 32, rue de la Loge, F-13002 Marseille (FR)**

BUNDESDRUCKEREI BERLIN

## Sécateur pneumatique à double effet

La présente invention a pour objet un sécateur pneumatique à double effet, notamment pour travaux de taille ou de récolte en arboriculture, viticulture et horticulture.

On connaît des sécateurs pneumatiques comportant une lame fixe ou crochet solidaire de la partie antérieure d'un corps servant de poignée, une lame pivotante articulée sur ledit crochet et reliée, au moyen d'une biellette, à la tige d'au moins un piston d'entrainement coulissant de manière étanche dans ledit corps, et un distributeur pneumatique généralement actionné par un levier de commande, pour permettre, alternativement, la mise sous pression ou à l'atmosphère de la chambre délimitée par la face active dudit piston, de façon à assurer la fermeture et l'ouverture des lames.

Selon un mode d'exécution connu de tels sécateurs (FR-A-2 190 346), le ou les pistons d'entraînement délimite(nt), à l'intérieur du corps, une ou des chambres disposée(s) en avant du ou des pistons, et une chambre disposée en arrière de l'unique piston ou en arrière du piston primaire, taudis que le distributeur pneumatique comprend: d'une part, un corps ou ensemble fixe comportant une ouverture permettant d'établir une communication entre l'arrivée du fluide comprimé et la ou les chambres disposée(s) en avant du ou des pistons, une ouverture autorisant la mise en relation de ladite arrivée de fluide comprimé et de la chambre disposée en arrière de l'unique piston ou en arrière du piston primaire, et une ouverture permettant d'établir une communication entre ladite chambre arrière et l'atmosphère; et, d'autre parts, des organes mobiles constitués par: — un dispositif d'admission dont les sièges opposés délimitent, respectivement, l'ouverture permettant d'établir une communication entre l'arrivée du fluide comprimé et la ou les chambres disposée(s) en avant du ou des pistons, et l'ouverture autorisant la mise en relation de ladite arrivée de fluide comprimé et de la chambre disposée en arrière de l'unique piston ou du piston primaire; — un clapet d'échappement dont le fonctionnement est, en partie, lié à celui du dispositif d'admission et commandant la mise à l'atmosphère de la chambre disposée en arrière de l'unique piston ou en arrière du piston primaire; — et un poussoir apte à agir sur ledit dispositif d'admission; ledit distributeur pneumatique comportant encore des moyens de rappel de ses organes mobiles. Suivant ce mode de réalisation, le dispositif d'admission est constitué par deux clapets entre lesquels est interposé un ressort tendant à les appliquer sur leurs sièges respectifs. Les sécateurs pneumatiques de ce genre présentent un sérieux inconvénient découlant du fait que la fermeture et l'ouverture des lames s'opèrent bursquement, tandis qu'il n'est pas possible d'immobiliser lesdites lames dans une position d'ouverture intermédiaire quelconque entre l'ouverture maximum et la fermeture, et viceversa. En effet, lorsqu'on soulève, au moyen du poussoir, le clapet fermant l'ouverture permettant d'établir une commonication entre l'arrivée du fluide comprimé et la chambre disposée en avant du piston d'entraînement, le clapet d'échappement est instantanément soulevé sous l'action dudit fluide, tandis que le second clapet est appliqué sur son siège en fermant ainsi l'ouverture permettant la mise en relation de l'arrivée du fluide comprimé et de la chambre disposée en arrière dudit piston. Ce dernier recule donc instantanément sans rencontrer de résistance et il n'y a aucun moyen de l'arrêter dans sa course. Il en résulte une source de danger, car il est pratiquement impossible d'arrêter le rabattement de la lame mobile en direction de la lame fixe lorsque le distributeur pneumatique a été actionné, et également une insuffisance notable compte tenu du fait qu'il est souvent souhaitable de réduire l'écartement des lames pour pénétrer dans une végétation relativement dense, afin de limiter les possibilités d'accrochage de la tête de coupe sur les branches ou rameaux.

Un but visé par la présente invention est, notamment, de remédier aux inconvénients susmentionnés.

Selon l'invention, ce but est atteint grâce au fait que le dispositif d'admission du distributeur pneumatique est constitué par un unique clapet d'admission susceptible d'être appliqué, par ses faces opposées, soit sur un siège inférieur délimitant l'ouverture mettant en communication d'arrivée du fluide comprimé et la ou les chambres disposée(s) en avant du ou des pistons d'entrainement de la lame mobile, soit sur un siège supérieur délimitant l'ouverture mettant en relation ladite arrivée de fluide comprimé et la chambre disposée en arrière de l'unique piston ou en arrière du piston primaire.

Grâce à cette disposition, le clapet d'admission soulevé de son siège au moyen du poussoir peut occuper une position intermédiaire quelconque entre ses deux positions extrêmes suivant lesquelles il est appliqué sur l'un ou l'autre de ses sièges, et dans cette position intermédiaire où le clapet d'échappement reste appliqué sur son siège, l'arrivée du fluide comprimé communique, à la fois, avec la ou les chambres disposée(s) en avant du ou des pistons d'entraînement et avec la chambre disposée en arrière de l'unique piston ou du piston primaire. Cette situation permet un recul lent du ou des pistons d'entraînement et, par conséquent, un pivotement lent de la lame mobile. D'autre part, en faisant revenir le clapet d'admission sur son siège inférieur, sans décoller le poussoir dudit clapet, on obtient l'immobilisation de la lame mobile dans la position où elle se trouve.

L'invention procure, notamment, les avantages suivants:

- possibilité d'utiliser deux vitesses de coupe, lente ou rapide;
- possibilité d'immobiliser la lame pivotante du sécateur, en cours de travail, dans n'importe quelle position intermédiaire d'ouverture, entre l'ouverture maximum et la fermeture complète;
  un tel réglage de l'écartement des lames facilitant la pénétration dans la végétation et la saisie des branches ou rameaux;
- obtention d'un appareil puissant, allégé et peu encombrant, bien que pourvu de deux pistons d'entraînement assurant la fermeture de la lame mobile par traction sur cette dernière.

Ces buts, caractéristiques et avantages, et d'autres encore, ressortiront mieux de la description qui suit et des dessins annexés dans lesquels:

La figure 1 est une vue en coupe axiale du sécateur pneumatique selon l'invention, dans la position d'ouverture des lames.

La figure 2 est une vue en coupe comparable à la figure 1 et représentant le sécateur dans la position de fermeture des lames correspondant à une action de coupe rapide.

La figure 3 est une vue de détail, à plus grande échelle et en coupe axiale, montrant le positionnement et l'agencement du distributeur, dans la situation illustrée à la figure 1.

La figure 4 est une vue analogue à la figure 3, représentant le distributeur dans la position illustrée à la figure 2.

La figure 5 est une vue de détail, à échelle encore plus grande et en coupe axiale, d'une variante d'exécution du distributeur représenté dans une position correspondant à l'ouverture des lames, de façon comparable à la figure 3.

On se reporte auxdits dessins pour décrire un exemple de réalisation particulièrement avantageux, bien que nullement limitatif, du sécateur pneumatique perfectionné selon l'invention.

On précise que, dans l'exposé qui suit et dans les revendications, les expressions »siège inférieur« et »siège supérieur« n'ont aucun caractère restrictif, ces expressions étant utilisées dans un but de concision pour distinguer les sièges des différents clapets.

Le sécateur comprend un corps, par exemple constitué d'un cylindre principal 1 servant de poignée et solidaire, par vissage, d'un boîtier avant 2 et d'un boîtier arrière 3.

Des moyens connus en soi assurent l'étanchéité de cet assemblage. Sur le boîtier avant, est fixé, de toute manière connue, le crochet ou lame fixe 4 de l'appareil. Sur ledit crochet 4, est articulée, au moyen d'un axe 5, la lame mobile 6 comportant un prolongement ou levier 6a articulé à l'une des extrémités d'une biellette 7 dont l'autre extrémité est articulée sur un tenon 8. La partie postérieure de ce dernier est vissée dans l'extrémité avant de la tige 9 d'un piston primaire 10 installé fixement sur l'extrémité arrière de ladite tige et logé, avec une aptitude de coulissement étanche, dans la partie arrière du cylindre primaire.

La portion avant de la tige 9 coulisse, de manière étanche, dans le boîtier avant 2 dont l'alésage est pourvu des moyens d'étanchéité nécessaires.

Autour de ladite tige du piston primaire, est monté, avec un faible espacement annulaire e1, un cylindre 11 constituant la tige d'un piston secondaire 12 rigidement solidaire de l'extrémité antérieure dudit cylindre.

Le piston secondaire 12 est logé, avec une latitude de coulissement étanche, dans un cylindre secondaire 13. La partie antérieure de ce dernier est, par exemple, emmanchée à force dans la partie postérieure cylindrique du boîtier avant 2, tandis qu'un faible espace annulaire e2 est ménagé entre la surface de sa partie arrière et l'alésage de la partie avant du cylindre principal 1 lequel comporte un perçage 14 établissant une communication permanente entre ledit espace et l'atmosphère.

La tige 11 du piston secondaire est montée, avec une aptitude de coulissemant étanche, dans un piston de retenue 15 logé dans le cylindre principal 1 et calé contre l'extrémité arrière du cylindre secondaire 13, laquelle comporte une ou plusieurs lumières 16 établissant une relation constante entre la chambre C5 délimitée par les pistons 12 et 15 et l'espace annulaire e2 communiquant avec l'atmosphère. La périphérie du piston de retenue fixe est munie d'un joint d'étanchéité. L'extrémité postérieure de la tige 11 comporte des lumières 11a débouchant en permanence sur le côté arrière du piston fixe de retenue 15, quelle que soit la position occupée par ladite tige.

La partie postérieure alésée de la tige 9 du piston primaire, est montée avec une aptitude de coulissement sur une tige cylindrique creuse 17 d'alimentation, l'étanchéité de ce coulissemant étant assurée de toute manière connue et, par exemple, au moyen de joints annulaires à lèvre installés sur la périphérie de l'extrémité avant de ladite tige d'alimentation et de guidage.

L'extrémité arrière de la tige d'alimentation est solidaire d'un piston 18 d'alimentation installé fixement, de manière connue en soi, dans un logement cylindrique 19 ménagé dans le boîtier arrière.

La face arrière de ce piston comporte un épaulement circulaire 18a permettant de ménager un faible espace e3 entre ladite face et le fond du logement 19, tandis que la périphérie dudit piston est munie d'un joint d'étanchéité.

La tige 9 du piston primaire comporte des perçages radiaux 20 débouchant dans son alésage.

Selon la construction décrite ci-dessus, le sécateur comprend:

- une chambre C2 délimitée par la face postérieure du piston primaire 10 et la face avant du boîtier arrière 3;
— une chambre C3 délimitée par la face avant du piston primaire 10 et la face postérieure du piston de retenue 15;
— une chambre C4 délimitée par la face avant du piston secondaire 12 et la face postérieure du boîtier avant 2, et communiquant en permanence avec ladite chambre C3.

La face postérieure du boîtier avant et la face antérieure du boîtier arrière constituant, respectivement, le fond des chambres C4 et C2 sont avantageusement pourvues de joints toriques amortisseurs contre lesquels butent, respectivement, les pistons secondaire 12 et primaire 10, en fin de course.

Le distributeur commandant le déplacement des pistons 10 et 12 est installé dans un évidement diamétral 21 que présente le boîtier arrière 3 constituant la partie postérieure du corps du sécateur.

Dans cet évidement d'axe perpendiculaire aux axes des pistons d'entraînement 10 et 12, débouchent:

— l'orifice d'alimentation 22 ménagé axialement à la partie postérieure du boîtier arrière 3 et agencé pour pouvoir être connecté, de toute manière connue, à une tuyauterie souple (non représentée) elle-même reliée à une source de production d'air comprimé (compresseur ou autre);
— deux canaux d'échappement 23 et 24 disposés parallèlement audit orifice d'alimentation et communiquant avec l'atmosphère;
— un canal 25 communiquant avec le logement 19 et, par suite, avec les chambres C4 et C3;
— au moins un canal et, par exemple, deux canaux parallèles 26 communiquant avec la chambre C2.

Dans l'évidement 21, sont installés, en alignement, les principaux organes du distributeur, soit:

— un clapet d'admission 27 permettant d'établir ou de fermer la communication entre: d'une part, l'orifice d'alimentation 22 et le canal 25, et, — d'autre part, ledit orifice d'alimentation et les canaux 26;
— un clapet d'échappement 28 constitué par un organe indépendant du clapet d'admission 27 et grâce auquel il est possible de mettre en relation le canal d'échappement 23 et les canaux 26 communiquant avec la chambre C2;
— un tiroir de distribution fixe 29 servant de sièges aux clapets 27 et 28;
— un poussoir 30 également constitué par un organe indépendant desdits clapets et pourvu d'un canal d'évacuation permettant de mettre en correspondance ou en position de non correspondance, le canal d'échappement 24 et le canal 25 communiquant avec les chambres C4 et C3.

Le poussoir 30 est monté avec une aptitude de coulissement, par l'intermédiaire de son extrémité externe formant gâchette, dans un guide-écrou 31 vissé dans l'une des ouvertures de l'évidement 21.

Le canal d'évacuation que présente ledit poussoir, est constitué par un alésage borgne axial 32 s'ouvrant à son extrémité interne et par des perçages radiaux 33 débouchant dans ledit alésage.

Le poussoir 30 comporte, extérieurement, deux épaulements circulaires 35 et 35 disposés de part et d'autre des perçages radiaux 33.

L'épaulement 34 proche de l'extrémité externe du poussoir tend à être appliqué contre le guide-écrou 31 sous l'action d'un ressort 36 prenant appui, par ses extrémités opposées, d'une part, contre l'épaulement 35 et, d'autre part, contre un épaulement intérieur 37 ménagé dans l'évidement 21. L'épaulement 35 proche de l'extrémité interne ouverte du poussoir, est muni d'un joint périphérique assurant son coulissement étanche.

Le clapet d'admission 27 affecte une forme générale cylindrique et comporte un alésage axial borgne dans le fond duquel débouchent des perçages radiaux 38. Ce clapet est, par exemple, exécuté en acier, et ses faces opposées sont pourvues de joints réalisés en un matériau doté d'une certaine capacité de déformation élastique. Notamment, la face du clapet 27 destinée à venir en appui sur le siège inférieur du tiroir de distribution, est munie d'un joint compressible 62 jouant un rôle important dans le fonctionnement du sécateur selon l'invention.

Le tiroir de distribution 29 est installé fixement dans l'évidement 21. Il est calé, par exemple, par l'intermédiaire d'un renflement circulaire 39 constituant son extrémité dirigée vers l'extérieur, d'une part, contre un épaulement 40 que présente l'évidement 21 et, d'autre part, contre la base d'un bouchon de fermeture 41 vissé dans la seconde ouverture dudit évidement.

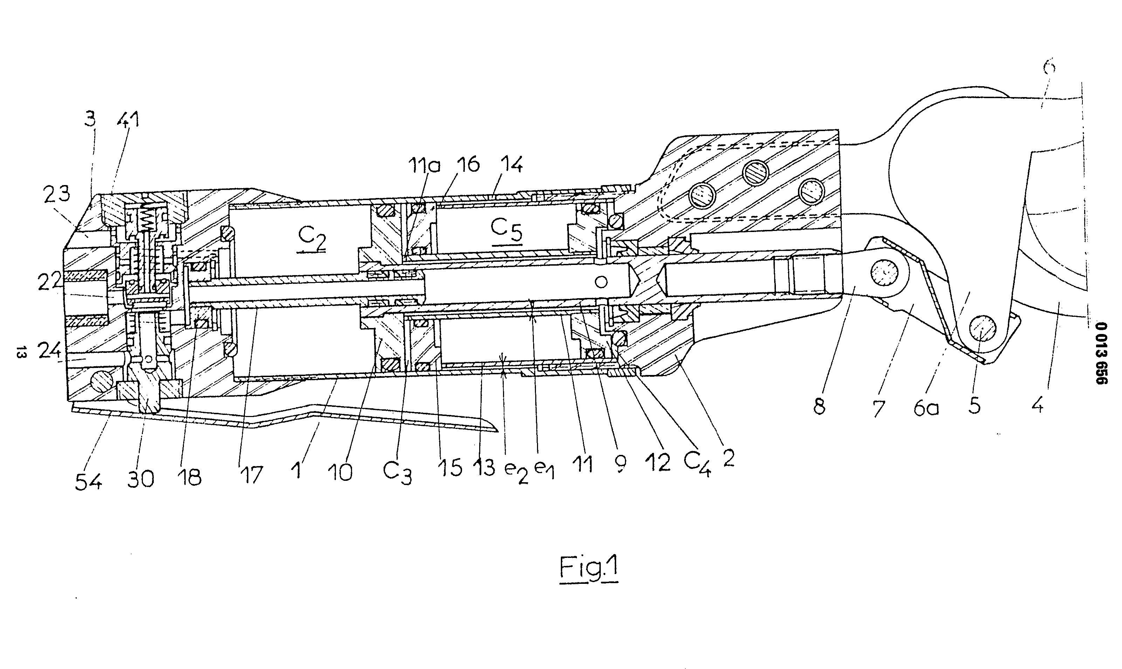

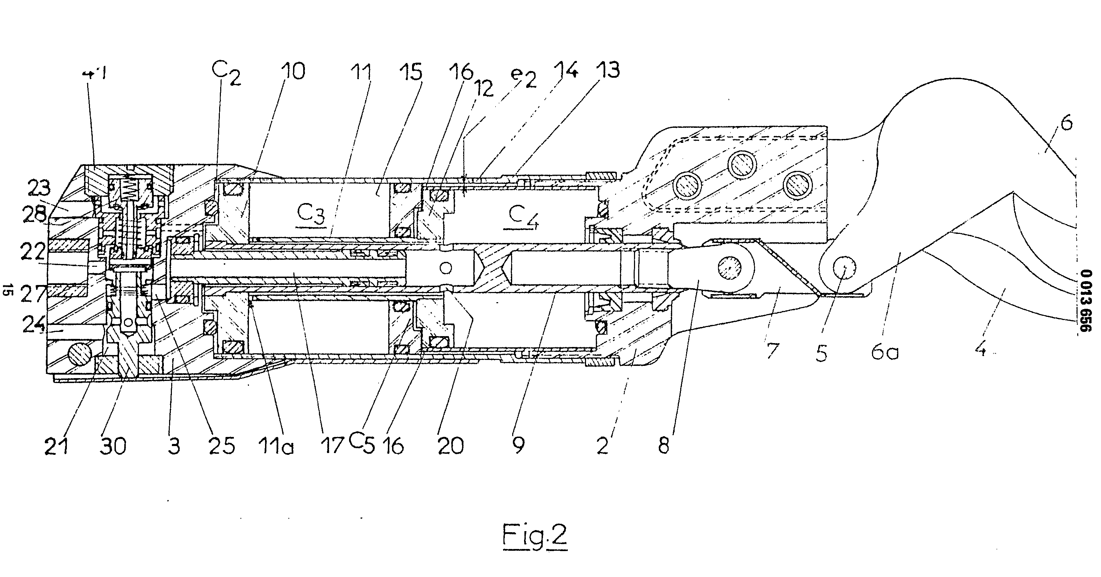

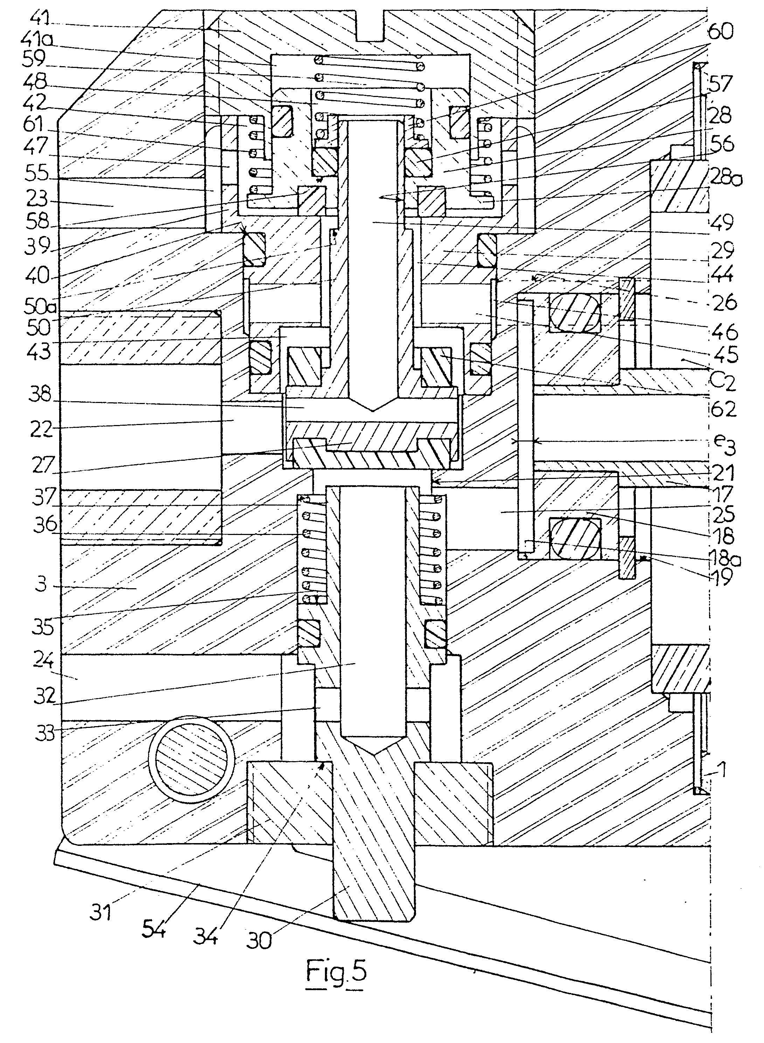

Le tiroir de distribution 29 est évidé, axialement, suivant différents diamètres. Il comporte, à ses extrémités, deux cavités cylindriques 42 et 43 comminiquant avec un étranglement cylindrique intermédiaire 44 dans lequel débouchent des perçages radiaux 45 aboutissant dans un espace annulaire 46 (figure 5) ou dans une gorge annulaire périphérique 46 (figures 1 à 4) se trouvant en relation constante avec les canaux 26. De part et d'autre de la gorge 46, le tiroir de distribution est équipé de joints annulaires d'étanchéité.

La paroi cylindrique délimitant la cavité 42 est pourvue de perçages 47 débouchant dans un espace annulaire 55 ménagé autour de ladite paroi, cet espace communiquant avec le canal d'échappement 23.

Le clapet d'échappement 28 est logé, avec une aptitude de déplacement axial, d'une part, dans la vacité cylindrique élargie 42 du tiroir distributeur et, d'autre part, dans un évidement borgne cylindrique 41a que présente le bouchon de fermeture 41. Le clapet 28 coulisse de manière étanche dans ledit évidement borgne et est équipé, dans ce but, d'un joint périphérique, tandis que sa face venant en appui sur le siège constitué par le fond de la cavité cylindrique élargie 42 est avantageusement munie d'un joint d'étanchéité.

Le fond de l'évidement borgne 41a ménagé dans le bouchon 41 et la face du clapet orientée en direction dudit fond, délimitent une chambre C1. Cette chambre communique en permanence avec l'orifice d'alimentation 22, par l'intermédiaire d'un perçage axial ménagé dans le clapet d'échappement 28 et d'un canal axial 49 traversant une tige-poussoir 50 solidaire dudit clapet d'échappement (figures 1 à 4) ou du clapet d'admission 27 (figure 5).

Suivant le mode d'exécution illustré aux figures 1 à 4, la tige-poussoir 50 solidaire du clapet d'échappement 28 traverse le tiroir de distribution 29 et son extrémité libre équipée d'un joint périphérique d'étanchéité est logée, avec une latitude de coulissement étanche, dans l'alésage borgne axial du clapet d'admission 27.

Un ressort 51 monté autour de la tige-poussoir 50 et prenant appui, par ses extrémités opposées, d'une part, contre un épaulement circulaire intérieur 52 que présente l'évidement 21 et, d'autre part, contre le clapet d'admission 27, tend à appliquer ce dernier sur le siège délimitant l'ouverture faisant communiquer l'admission et les chambres C4 et C3.

D'autre part, un ressort 53 calé entre le fond de l'évidement borgne du bouchon de fermeture 41 et le fond d'une cavité axiale 48 dont est pourvu le clapet d'échappement 28, tend à appliquer ce dernier sur son siège. Selon le mode de réalisation représenté à la figure 5, la tige-poussoir 50 est solidaire du clapet d'admission 27 et traverse le tiroir de distribution. Son extrémité libre coulisse, de manière étanche, dans un passage axial 56 ménagé dans le clapet d'échappement 28. Un joint annulaire 57 entourant la tige-poussoir est, par exemple, calé contre un épaulement 58 que présente le passage axial.

Le clapet d'échappement 28 est soumis à l'action de deux ressorts tendant à l'appliquer sur son siège, soit:

— un premier ressort 59 placé en appui, par ses extrémités opposées, d'une part, contre le fond de l'évidement borgne 41a et, d'autre part, contre un épaulement que présente une rondelle-guide 60 entourant l'extrémité libre de la tige-poussoir 50 et calée contre le joint 57;
— un second ressort 61 calé, par ses extrémités opposées, d'une part, contre une plage d'appui que présente le bouchon 41 et, d'autre part, contre un épaulement périphérique 28a dudit clapet d'échappement.

Au-dessous de ce dernier, la tige-poussoir 50 comporte un épaulement d'entraînement 50a.

Sur le boîtier arrière 3, est articulé, de manière classique, le levier de commande 54 du sécateur, prenant appui, par sa face interne, contre l'extrémité émergente formant gâchette du poussoir 30.

Le fonctionnement de ce sécateur pneumatique est le suivant:

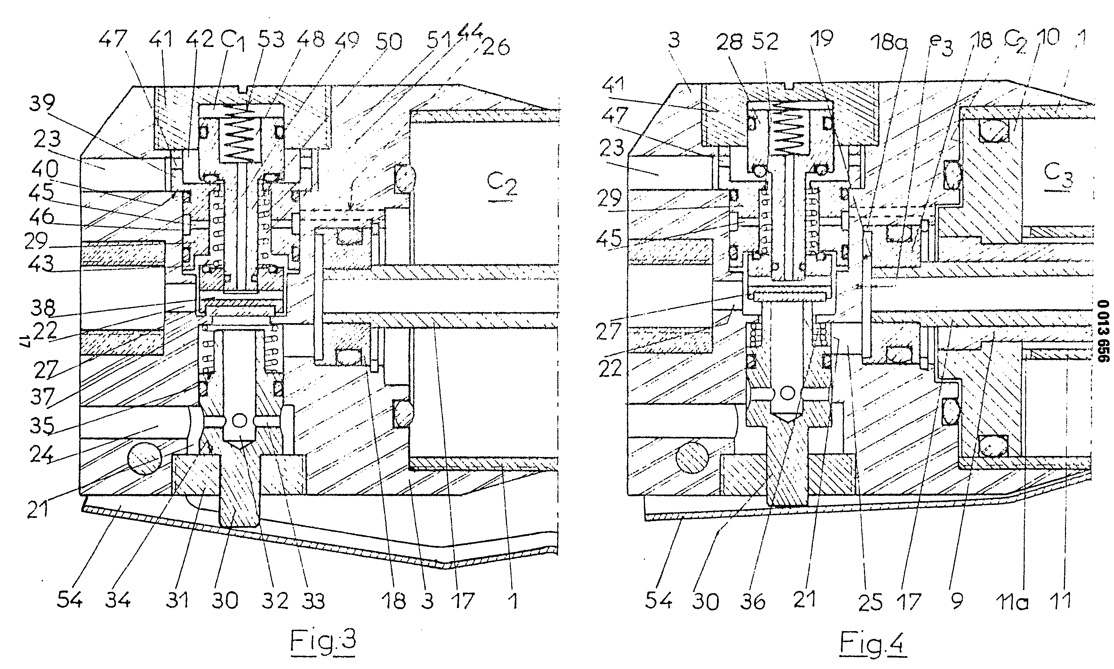

— dans la position de repos correspondant à l'ouverture des lames 4 et 6 (figures 1, 3 et 5), le poussoir 30 bute sur le guide-écrou 31, sous la poussée du ressort 36; par ailleurs, le clapet d'admission 27 est appliqué sur son siège inférieur délimitant l'ouverture d'accès aux chambres C4 et C3, sous l'effet conjugué du ressort 51 et de la pression présente à l'alimentation (figures 1 et 3) ou simplement de la pression présente à l'alimentation (figure 5), tandis que le clapet d'échappement 28 est maintenu sur son siège sous la poussée du ressort 53 et de la pression présente dans la chambre C1 communiquant avec l'alimentation à travers les perçages 38, le canal 49 et la cavité 48 (figures 1 et 3), ou sous la poussée des ressorts 59 et 61 et de la pression présente dans ladite chambre C1 communiquant avec l'alimentation à travers ledit canal 49 et lesdits perçages radiaux 38 (figure 5). Dans cette situation, l'air comprimé pénétrant dans l'orifice d'alimentation traverse successivement: le passage annulaire ménagé autour du clapet 27, le passage annulaire 44 réservé autour de la tige-poussoir 50 dans le tiroir de distribution 29, les perçages 45, la gorge ou l'espace annulaire 46 et les canaux 26, avant d'arriver dans la chambre C2 qui se trouve ainsi sous pression laquelle, s'exerçant sur la face postérieure du piston primaire 10, tend à maintenir ce dernier à proximité du piston de retenue 15. Les chambres C3 et C4 communiquent avec l'atmosphère, par l'intermédiaire de l'espace annulaire e1, des perçages 20, de l'alésage de la tige 9, de l'alésage de la tige 17, de l'espace e3, du canal 25, du canal d'évacuation 32—33, du canal d'échappement 24.

Lorsqu'on appuie sur le levier de commande 54, on repousse le poussoir 30 dont l'extrémité interne ouverte vient, dans un premier temps, s'appuyer contre le clapet d'alimentation 27, ce qui a pour effet d'interrompre la communication avec l'atmosphère des chambres C3 et C4, l'entrée du canal d'évacuation 32—33 se trouvant fermée.

Dans un deuxième temps, le poussoir 30 soulève le clapet 27 de son siège inférieur, ce qui a pour effet de mettre en pression les chambres C3 et C4, l'air comprimé pénétrant successivement dans le canal 25, l'espace e3, l'alésage de la tige 17, l'alésage de la tige 9, les perçages 20 et l'espace annulaire e1.

La mise en pression des chambres C3 et C4 provoque le recul progressif des pistons d'entraînement 10 et 12 et, par conséquent, la fermeture progressive de la lame mobile 6, les surfaces antérieures additionnées desdits pistons sur lesquelles s'exerce la pression étant, en effet, plus importantes que la surface postérieure dudit piston 10 sur laquelle s'applique également ladite pression. .

Si l'on arrête l'admission (en laissant revenir le clapet 27 sur son siège inférieur sans décoller le poussoir 30 dudit clapet), les lames restent écartées dans la position où elles se trouvent.

On comprend qu'il est ainsi possible de régler l'écartement des lames, aussi bien lors de la phase de fermeture, que lors de la phase d'ouverture desdites lames.

En continuant à repousser le poussoir, on plaque, dans un troisième temps, la face opposée du clapet 27 sur son siège supérieur constitué par le siège inférieur du tiroir de distribution 29, ce que a pour effet de supprimer la communication entre l'admission et la chambre C2, par la fermeture du passage 44 – 45 – 46 – 26.

En exerçant une poussée supplémentaire sur le poussoir 30, rendue possible par la capacité de déformation du joint équipant la face du clapet 27 appuyée sur le siège inférieur du tiroir de distribution, on provoque le soulèvement du clapet d'échappement 28 du siège supérieur dudit tiroir de distribution. La chambre C2 se trouve ainsi mise à l'atmosphère par l'intermédiaire du passage 26 – 46 – 45 – 44 – 42 – 47 – 23, ce qui a pour effet de supprimer l'effort résistant s'exerçant sur la face postérieure du piston 10 et de permettre le recul rapide dudit piston et du piston 12, et, par conséquent, la fermeture instantanée des lames, sous l'effet de la pression s'exerçant sur la face avant desdits pistons.

Suivant le mode d'exécution illustré aux figures 1 à 4, le soulèvement du clapet d'échappement 28 s'opère par l'intermédiaire du fond de l'alésage axial borgne du clapet d'admission 27, permettant de repousser la tige-poussoir 50.

Selon la réalisation représentée à la figure 5, le soulèvement du clapet d'échappement 28 est aussuré par l'épaulement d'entraînement 50a de la tige-poussoir 50 solidaire du clapet d'admission 27.

Lorsqu'on relâche la pression manuelle sur le levier de commande 54, le recul du poussoir 30 sous l'action du ressort 36 entraîne successivement:

– l'application du clapet d'échappement 28 sur son siège, sous l'effet conjugué du ressort 53 et de la pression d'alimentation (selon la réalisation des figures 1 à 4) ou des ressorts 59 et 61 et de la pression d'alimentation (suivant la réalisation de la figure 5), et, par conséquent, l'interruption de la mise à l'atmosphère de la chambre C2;

– le décollement du clapet d'admission 27 de son siège supérieur, sous l'effet du ressort 51 (suivant le mode d'exécution des figures 1 à 4) ou de la pression d'alimentation (selon la réalisation de la figure 5), et, de la sorte, la mise sous pression de la chambre C2;

– l'application du clapet d'admission sur son siège inférieur délimitant l'ouverture d'accès aux chambres C4 et C3, sous la poussée exercée par le ressort 51 et la pression d'alimentation (suivant la réalisation des figures 1 à 4) ou seulement de la pression d'alimentation (selon le mode d'exécution de la figure 5), ce qui a pour effet d'interrompre la communication desdites chambres avec l'alimentation:

– le décollement de l'extrémité ouverte dudit poussoir de la face fermée du clapet, provoquant la mise à l'atmosphère des chambres C4 et C3, de sorte que la pression s'exerçant sur la face postérieure du piston primaire 10 repousse ce dernier vers l'avant lequel, par l'intermédiaire de la tige 9, assure l'ouverture de la lame 6, le déplacement vers l'avant dudit piston primaire entraînant un mouvement identique du piston secondaire 12, par l'intermédiaire de la tige-entretoise 11.

## Revendications

1. Sécateur pneumatique, notamment pour travaux de taille ou de récolte en arboriculture, viticulture ou horticulture, comportant un corps (1) à l'extrémité avant duquel sont installées deux lames dont une lame pivotante (6) actionnée par un dispositif pneumatique comprenant au moins un piston d'entrainement (10) logé avec une aptitude de coulissement axial étanche dans ce corps, le ou lesdits pistons delimitant, à l'intérieur duit corps, une ou des chambres (C3, C4) disposée(s) en avant du ou des pistons (10, 12) et une chambre (C2) disposée en arrière de l'unique piston ou en arrière du piston primaire (10), tandis que le distributeur pneumatique comprend: d'une part, un corps ou ensemble fixe (3, 29) comportant une ouverture permettant d'établir une communication entre l'arrivée (22) du fluide comprimé et la ou les chambres (C3, C4) disposée(s) en avant du ou des pistons (10, 12), une ouverture autorisant la mise en relation de ladite arrivée de fluide comprimé et de la chambre (C2) disposée en arrière de l'unique piston ou en arrière du piston primaire (10), et une ouverture permettant d'établir une communication entre ladite chambre arrière et l'atmosphère; et, d'autre part, des organes mobiles disposés en alignement et constitués par: – un dispositif d'admission dont les sièges inférieur et supérieur opposés délimitent, respectivement, l'ouverture permettant d'établir une communication entre l'arrivée (22) du fluide comprimé et la ou les chambres (C3, C4) disposée(s) en avant du ou des pistons (10, 12), et l'ouverture autorisant la mise en relation de ladite arrivée de fluide comprimé et de la chambre (C2) disposée en arrière de l'unique piston ou du piston primaire (10); − un clapet d'échappement (28) dont le fonctionnement est, en partie, lié à celui du dispositif d'admission et commandant la mise à l'atmosphère de la chambre (C2) disposée en arrière de l'unique piston ou en arrière du piston primaire (10); − et un poussoir (30) apte à agir sur ledit dispositif d'admission; ledit distributeur pneumatique comportant encore des moyens de rappel de ses organes mobiles, caractérisé en ce que le dispositif d'admission est constitué par un unique clapet d'admission (27) ayant deux faces opposées et susceptible d'être appliqué, soit sur le siège inférieur délimitant l'ouverture mettant en communication l'arrivée (22) du fluide comprimé et la ou les chambres (C3, C4) disposées en avant du ou des pistons d'entraînement (10, 12) de la lame mobile, soit sur le siège supérieur délimitant l'ouverture mettant en relation ladite arrivée de fluide comprimé et la chambre (C2) disposée en arrière de l'unique piston ou en arrière du piston primaire (10).

2. Sécateur pneumatique selon la revendication 1, caractérisé en ce que ledit distributeur comporte des moyens permettant d'interrompre la mise à l'atmosphère de la ou des chambres (C3, C4) disposée(s) en avant de l'unique piston d'entraînement ou en avant des pistons primaire (10) et secondaire (12), avant soulèvement du clapet d'admission (27) de son siège inférieur.

3. Sécateur pneumatique suivant l'une des revendications 1 ou 2, caractérisé en ce que ledit distributeur comporte des moyens autorisant le soulèvement du clapet d'échappement (28) après que le clapet d'admission (27) ait été appliqué sur son siège supérieur.

4. Sécateur pneumatique suivant l'une quelconque des revendications 1 à 3, caractérisé en ce que les moyens tendant à appliquer le clapet d'échappement (28) sur son siège comprennent une chambre (C1) délimitée par la face opposée dudit clapet et se trouvant en relation constante avec l'arrivée du fluide comprimé.

5. Sécateur penumatique selon les revendications 3 ou 4, caractérisé en ce que les moyens permettant de soulever le clapet d'échappement (28) après que le clapet d'admission (27) ait été appliqué sur son siège supérieur, comprennent une tige-poussoir creuse (50) solidaire dudit clapet d'admission et dont l'extrémité libre coulisse, de manière étanche, dans un alésage axial borgne ménagé dans le clapet d'admission et dans lequel débouchent des perçages radiaux (38) communiquant en permanence avec l'arrivée du fluide comprimé, l'alésage (49) de ladite tige-poussoir communiquant avec la chambre de pression (C1) délimitée par la face opposée du clapet d'échappement dont le soulèvement est autorisé par la capacité de déformation du joint (62) assurant l'étanchéité entre ledit clapet d'admission et le siège supérieur de ce dernier.

6. Sécateur pneumatique selon les revendications 3 ou 4, caractérisé en ce que les moyens permettant de soulever le clapet d'échappement (28) après que le clapet d'admission (27) ait été appliqué sur son siège supérieur, comprennent une tige-poussoir creuse (50) solidaire dudit clapet d'admission et dont l'extrémité libre coulisse, de manière étanche, dans un passage axial ménagé dans ledit clapet d'échappement, ladite tige-poussoir étant pourvue d'un épaulement d'entraînement (50a) et comportant un alésage axial (49) dans le fond duquel débouchent des perçages radiaux (38) ménagés dans ledit clapet d'admission et communiquant en permanence avec l'arrivée du fluide comprimé, ledit alésage (49) communiquant avec la chambre de pression (C1) délimitée par la face opposée du clapet d'échappement dont le soulèvement est autorisé par la capacité de déformation du joint (62) assurant l'étanchéité entre le clapet d'admission et le siège supérieur de ce dernier.

7. Sécateur pneumatique selon l'une quelconque des revendications 1 à 6, caractérisé en ce que le siège supérieur du clapet d'admission (27) et le siège du clapet d'échappement (28) sont constitués par les faces opposées d'un tiroir de distribution fixe (29) comportant un évidement axial comprenant un étranglement (44) dans lequel débouchent des perçages (45) communiquant en permanence avec la chambre (C2) délimitée par la face postérieure du piston primaire (10) ou de l'unique piston, lesdits perçages s'ouvrant dans une gorge ou dans un espace annulaire (46) communiquant avec le canal ou les canaux (26) débouchant dans ladite chambre (C2); des joints annulaires d'étanchéité étant disposés de part et d'autre de ladite gorge ou dudit espace annulaire.

8. Sécateur pneumatique suivant l'une quelconque des revendications 1 à 7, comportant deux pistons d'entraînement (10, 12) logés avec une aptitude de coulissement étanche dans le corps (1) et un piston fixe de retenue (15) monté entre lesdits pistons d'entrainement comprenant un piston primaire (10) dont la tige (9) est reliée à la lame pivotante et un piston secondaire (12) monté autour de ladite tige et en avant dudit piston primaire, les faces antérieures desdits pistons d'entraînement délimitant deux chambres (C3, C4) susceptibles d'être mises simultanément à l'atmosphère ou en pression par l'intermédiaire du distributeur et d'un circuit approprié, tandis que la face postérieure du piston primaire délimite une troisième chambre (C2) apte á être mise en pression ou à l'atmosphère au moyen dudit distributeur, caractérisé en ce que le piston secondaire (12) est solidaire d'une tige (11) entourant la tige (9) du piston primaire (10) et dont l'extrémité libre est placée en appui contre la face avant dudit piston primaire, ladite tige du piston secondaire coulissant, de manière étanche, dans le piston de retenue (15).

9. Sécateur pneumatique suivant la revendication 8, dont la tige (9) du piston primaire (10) comporte, dans sa partie postérieure, un alésage borgne à proximité du fond duquel débouchent des perçages radiaux (20), caractérisé en ce que le passage faisant communiquer le distributeur et les chambres délimitées par les faces avant des pistons d'entraînement, comprend:

— l'alésage d'une tige creuse (17) sur laquelle coulisse, de manière étanche, la tige (9) du piston primaire, ladite tige creuse (17) étant montée fixement dans un logement (19) ménagé dans la partie postérieure du corps et communiquant avec l'évidement dans lequel est installé le distributeur;
— un espace annulaire (e1) ménagé entre les tiges (9, 11) des pistons primaire et secondaire (10, 12);
— des lumières (11a) dont est pourvue l'extrémité arrière de la tige dudit piston secondaire.

10. Sécateur pneumatique selon l'une des revendications 8 ou 9, dont le piston primaire (10) coulisse dans un alésage longitudinal ménagé dans le corps dudit sécateur, caractérisé en ce que le piston secondaire (12) coulisse dans l'alésage d'un cylindre (13) logé coaxialement dans ledit corps et contre lequel est calé le piston de retenue (15), un espace annulaire (e2) étant ménagé entre ledit corps et ledit cylindre dont l'extrémité postérieure est dotée de lumières (16) communiquant avec ledit espace dans lequel débouche encore un orifice (14) de mise à l'atmosphère que comporte ledit corps.

**Patentansprüche**

1. Pneumatische Schere, insbesondere für den Baumschnitt und für die Ernte im Obstbau, im Weinbau oder im Gartenbau, mit einem Körper (1), dessen vorderes Ende mit zwei Messern versehen ist, wobei eines (6) der Messer, das schwenkbar angeordnet ist, durch eine luftbetätigte Einrichtung angetrieben wird, die mindestens einen Antriebskolben (10) aufweist, der axial gleitbar und dichtend im Körper angeordnet ist, wobei der bzw. die Kolben innerhalb des Körpers eine oder mehrere Kammern (C3, C4), die vor dem bzw. den Kolben (10, 12) angeordnet ist bzw. sind, sowie eine Kammer (C2) begrenzen, die hinter dem einzigen Kolben bzw. hinter dem primären Kolben (10) angeordnet ist, während der Luftverteiler einerseits einen feststehenden Körper oder eine feststehende Baugruppe (3, 29), dessen bzw. deren Öffnung die Herstellung einer Verbindung zwischen dem Druckmediumeinlaß (22) und der bzw. den Kammern (C3, C4) zuläßt, die vor dem bzw. den Kolben (10, 12) angeordnet ist bzw. sind, eine Öffnung, die die Herstellung einer Verbindung zwischen dem Druckmediumeinlaß und der Kammer (C2) zuläßt, die hinter dem einzigen Kolben oder hinter dem primären Kolben (10) liegt, und eine Öffnung, die die Herstellung einer Verbindung zwischen der genannten hinteren Kammer und der Atmosphäre zuläßt, und andererseits bewegliche Organe aufweist, die miteinander ausgefluchtet sind und aus einer Einlaßeinrichtung, deren untere und obere sich gegenüberstehende Sitze die Öffnung, die die Herstellung einer Verbindung zwischen dem Druckmediumeinlaß (22) und der bzw. den Kammern (C3, C4), die vor dem bzw. den Kolben (10, 12) angeordnet ist bzw. sind, ermöglicht bzw. die Öffnung zur Herstellung einer Verbindung zwischen dem genannten Druckmediumeinlaß und der Kammer (C2), die hinter dem einzigen Kolben oder hinter dem primären Kolben (10) angeordnet ist, bilden; aus einem Auslaßventil (28), dessen Funktion teilweise mit der der Einlaßeinrichtung verbunden ist und das das Verbinden mit der Atmosphäre der Kammer (C2) steuert, die hinter dem einzigen Kolben oder hinter dem primären Kolben angeordnet ist; und aus einer Schubstange (30), die auf die genannte Einlaßeinrichtung wirkt, bestehen, wobei der genannte Luftverteiler weiterhin Rückholmittel für seine beweglichen Organe aufweist, dadurch gekennzeichnet, daß die Einlaßeinrichtung aus einem einzigen Einlaßventil (27), mit zwei sich gegenüberstehenden Oberflächen besteht und das entweder gegen den unteren Sitz, der die Öffnung bildet, die die Druckmediumeinlaßöffnung (22) mit der bzw. den Kammern (C3, C4), die vor dem bzw. den Antriebskolben (10, 12) des beweglichen Messers angeordnet sind, in Verbindung setzt, oder gegen den oberen Sitz, der die Öffnung bildet, die die genannte Druckmediumeinlaßöffnung mit der Kammer (C2) verbindet, die hinter dem einzigen Kolben oder hinter dem primären Kolben (10) angeordnet ist, zur Anlage gebracht werden kann.

2. Pneumatische Schere nach Anspruch 1, dadurch gekennzeichnet, daß der genannte Verteiler Mittel aufweist, die die Unterbrechung der Verbindung zwischen der Atmosphäre und der bzw. den Kammern (C3, C4), die vor dem einzigen Antriebskolben oder vor dem primären (10) und dem sekundären Kolben (12) angeordnet sind, ehe das Einlaßventil (27) von seinem unteren Sitz gehoben worden ist, ermöglichen.

3. Pneumatische Schere nach einem der Ansprüche 1 oder 2, dadurch gekennzeichnet, daß der genannte Verteiler Mittel aufweist, die ein Anheben des Auslaßventils (28), nachdem das Einlaßventil (27) auf seinem oberen Sitz zur Anlage gebracht worden ist, ermöglichen.

4. Pneumatische Schere nach einem der Ansprüche 1 bis 3, dadurch gekennzeichnet, daß die Mittel zum Andrücken des Auslaßventils (28) gegen seinen Sitz eine Kammer (C1) aufweist, die durch die gegenüberstehende Wandung des Ventils begrenzt ist und ständig mit dem Druckmediumeinlaß in Verbindung steht.

5. Pneumatische Schere nach einem der Ansprüche 3 oder 4, dadurch gekennzeichnet, daß die Mittel, die ein Anheben des Auslaßventils (28) ermöglichen, nachdem das Einlaßventil auf seinen oberen Sitz angedrückt wurde, einen hohlen Stößel (50) aufweisen, der mit dem genannten Auslaßventil fest verbunden ist und dessen freies Ende in einer axialen Sackbohrung des Einlaßventils abgedichtet gleitet und in die radialen Bohrungen (38) münden, die ständig in Verbindung mit dem Druckmediumeinlaß stehen, wobei die Bohrung (49) des genannten Stößels mit der Druckkammer (C1) in Verbindung steht, die durch die gegenüberliegende Wandung des Auslaßventils begrenzt ist, dessen Anheben durch die Verformung der Verbindung (62), die eine abdichtende Funktion zwischen dem Auslaßventil und dessen oberem Sitz gewährleistet, ermöglicht ist.

6. Pneumatische Schere nach einem der Ansprüche 3 oder 4, dadurch gekennzeichnet, daß die Mittel, die ein Anheben des Auslaßventils (28) ermöglichen, nachdem das Einlaßventil (27) auf seinen oberen Sitz angedrückt wurde, einen hohlen Stößel (50) aufweisen, der mit dem Auslaßventil fest verbunden ist und dessen freies Ende in einer axialen Durchgangsöffnung des Auslaßventils abgedichtet gleitet, wobei der genannte Stößel mit einer Mitnahmeschulter (50a) und mit einer axialen Bohrung (49) versehen ist, wobei im Bereich des Endes der Bohrung (49) die radialen Bohrungen (38) münden, die in dem Einlaßventil vorgesehen sind und die mit dem Druckmediumeinlaß ständig in Verbindung stehen, wobei die genannte Bohrung (49) mit der Druckkammer (C1) in Verbindung steht, die durch die gegenüberliegende Wandung des Auslaßventils begrenzt ist, dessen Anheben durch die Verformung der Verbindung (62), die eine abdichtende Funktion zwischen dem Auslaßventil und dessen oberen Sitz gewährleistet, ermöglicht ist.

7. Pneumatische Schere nach einem der Ansprüche 1 bis 6, dadurch gekennzeichnet, daß der obere Sitz des Einlaßventils (27) und der Sitz des Auslaßventils (28) durch die gegenüberstehenden Wandungen eines feststehenden Verteilerschiebers (29) gebildet sind, dessen axiale Ausnehmung eine Drosselung (44) aufweist, in die Bohrungen (45) münden, die ständig mit der Kammer (C2) in Verbindung stehen, die durch die hintere Wandung des primären Kolbens (10) bzw. des einzigen Kolbens begrenzt ist, wobei die genannten Bohrungen in eine Rille oder in einen Ringraum (46) münden, der mit dem Kanal bzw. den Kanälen (26), die in die Kammer (C2) münden, in Verbindung steht bzw. stehen; wobei ringförmige Dichtungen an beiden Seiten der Rille oder des Ringraums angeordnet sind.

8. Pneumatische Schere nach einem der Ansprüche 1 bis 7, mit zwei Antriebskolben (10, 12), die gleitend und abgedichtet im Körper (1) angeordnet sind, und mit einem feststehenden Rückhaltekolben (15), der zwischen den genannten Antriebskolben liegt, die einen primären Kolben (10), dessen Kolbenstange (9) mit dem schwenkbar angeordneten Messer verbunden ist, und einen sekundären Kolben (12), der um die genannte Stange und vor dem primären Kolben angeordnet ist, aufweisen, wobei die vorderen Oberflächen der genannten Antriebskolben zwei Kammern (C3, C4) abgrenzen, die gleichzeitig mit der Atmosphäre verbunden oder unter Druck mittels des Verteilers und eines entsprechenden Kreises gesetzt werden können, während die hintere Oberfläche des primären Kolbens eine dritte Kammer (C2) abgrenzt, die mittels des genannten Verteilers unter Druck gesetzt oder mit der Atmosphäre verbunden werden kann, dadurch gekennzeichnet, daß der sekundäre Kolben (12) mit einer Stange (11) fest verbunden ist, die die Stange (9) des primären Kolbens (10) umgibt und deren freies Ende sich gegen die vordere Oberfläche des genannten primären Kolbens abstützt, wobei die genannte Stange des sekundären Kolbens in dem Rückhaltekolben (15) abgedichtet gleitet.

9. Pneumatische Schere nach Anspruch 8, bei der die Stange (9) des primären Kolbens (10) in seinem hinteren Teil eine Sackbohrung aufweist, wobei in den Bereich des Innenendes der Sackbohrung radiale Bohrungen (20) münden, dadurch gekennzeichnet, daß der Durchgangskanal, der den Verteiler und die Kammern, die durch die vorderen Oberflächen der Antriebskolben gebildet sind, miteinander verbindet,

— aus der Bohrung einer hohlen Stange (17), auf der die Stange (9) des primären Kolbens dichtend gleitet, wobei die hohle Stange (17) in einer Ausnehmung (19) des hinteren Teils des Körpers fest angeordnet ist und mit der Ausnehmung in Verbindung steht, in der der Verteiler angebracht ist;
— aus einem Ringraum (e1), der zwischen den Stangen (9, 11) des primären Kolbens bzw. des sekundären Kolbens vorgesehen ist; und
— aus den Öffnungen (11a), die an dem hinteren Ende der Stange des genannten sekundären Kolbens vorgesehen sind,

besteht.

10. Pneumatische Schere nach einem der Ansprüche 8 und 9, bei der der primäre Kolben (10) in einer Längsbohrung des Körpers der genannten Schere gleitet, dadurch gekennzeichnet, daß der sekundäre Kolben (12) in dem Innenraum eines Zylinders (13) gleitet, der in dem genannten Körper koaxial angeordnet ist und gegen den der Rückhaltekolben (15) verkeilt ist, wobei ein Ringraum (e2) zwischen dem genannten Körper und dem genannten Zylinder vorgesehen ist, dessen hinterer Endbereich mit Öffnungen (16) versehen ist, die mit dem genannten Ringraum in Verbindung stehen, in den noch eine weitere Öffnung (14) des Körpers mündet, die mit der Atmosphäre in Verbindung steht.

## Claims

1. Pneumatic secateurs, particularly for the work of pruning or of crop gathering in arboriculture, viticulture or horticulture, comprising a body (1) at the forward end of which are placed two blades of which one pivoting blade (6) is actuated by a pneumatic device comprising at least one driving piston (10) disposed with a capability of fluid-tight axial sliding in this body, the piston or pistons bounding, at the interior of the said body, a chamber or chambers (C3, C4) disposed in front of the piston or pistons (10, 12) and a chamber (C2) disposed behind the single piston or behind the primary piston (10), whilst the pneumatic distributor comprises: on the one hand, a fixed body or assembly (3, 29) comprising an opening permitting the establishment of a communication between the inlet (22) of compressed fluid and the chamber or chambers (C3, C4) disposed in front of the piston or pistons (10, 12), an opening permitting the placing in communication of the said compressed fluid inlet and the chamber (C2) disposed behind the single piston or behind the primary piston (10), and an opening permitting the establishment of a communication between the said rear chamber and the atmosphere; and, on the other hand, movable members disposed in alignment and constituted by: – an admission device the opposed lower and upper seats of which bound, respectively, the opening permitting the establishment of a communication between the compressed fluid inlet (22) and the chamber or chambers (C3, C4) disposed in front of the piston or pistons (10, 12), and the opening permitting the placing in communication of the said compressed fluid inlet and the chamber (C2) disposed behind the single piston or the primary piston (10); – an escape valve (28) the operation of which is, in part, connected to that of the admission device and controlling the opening to atmosphere of the chamber (C2) disposed behind the single piston or behind the primary piston (10); – and a pusher member (30) adapted to act on the said admission device; the said pneumatic distributor comprising further means for returning of its movable members, characterised in that the admission device is constituted by a single inlet valve (27) having two opposed faces and capable of being seated either onto the lower seat bounding the opening placing into communication the inlet (22) for compressed fluid and the chamber or chambers (C3, C4) disposed in front ot the driving piston or pistons (10, 12) of the movable blade, or on the upper seat bounding the opening placing into communication the said inlet of compressed fluid and the chamber (C2) disposed behind the single piston or behind the primary piston (10).

2. Pneumatic secateurs, according to claim 1, characterised in that the said distributor comprises means permitting interruption of the opening to atmosphere of the chambers or chambers (C3, C4) disposed in front of the single driving piston or in front of the primary piston (10) and the secondary piston (12), before lifting of the admission valve (27) from its lower seat.

3. Pneumatic secateurs, according to one of claims 1 or 2, characterised in that the said distributor comprises means permitting the lifting of the escape valve (28) after the admission valve (27) has been seated onto its upper seat.

4. Pneumatic secateurs, according to any one of claims 1 to 3, characterised in that the means tending to seat the escape vlave (28) onto its seat comprise a chamber (C1) bounded by the opposite face of the said valve and in constant relation with the inlet of compressed fluid.

5. Pneumatic secateurs, according to claims 3 or 4, characterised in that the means permitting to lift the escape valve (28) after the inlet valve (27) has been seated onto its upper seat comprise a hollow push rod (5) integral with the said escape valve and the free end of which slides, in fluid-tight manner, in a blind axial bore formed in the inlet valve and into which open radial apertures (38) in permanent communication with the inlet of compressed fluid, the bore (49) of the said push rod communicating with the pressure chamber (C1) bounded by the opposed face of the escape valve, the lifting of which is permitted by the capacity for deformation of the joint (62) ensuring the fluid-tightness between the said inlet valve and the upper seat of this latter.

6. Pneumatic secateurs, according to claims 3 or 4, characterised in that the means permitting to lift the escape valve (28) after the inlet valve (27) has been seated onto its upper seat, comprise a hollow push rod (50) integral with the said inlet valve and the free end of which slides, in fluid-tight manner, in an axial passage formed in the said escape valve, the said push rod being provided with a driving shoulder (50a) and comprising an axial bore (49) into the bottom of which open radial apertures (38) formed in the said inlet valve and communicating permanently with the inlet of compressed fluid, the said bore (49) communicating with the pressure chamber (C1) bounded by the opposed face of the escape valve the lifting of which is permitted by the capacity for deformation of the joint (62) ensuring the fluid-tightness between the inlet valve and the upper seat of this latter.

7. Pneumatic secateurs, according to any one of claims 1 to 6, characterised in that the upper seat of the inlet valve (27) and the seat of the escape valve (28) are constituted by the opposed faces of a fixed distribution slide (29) comprising an axial recess comprising a constriction (44) into which open apertures (45) communicating permanently with the chamber (C2) bounded by the rear face of the primary piston (10) or of the single piston, the said apertures opening into a throat or into an annular space (46) communicating with the channel or channels (26) opening into the said chamber (C2); annular fluid-tight seals being disposed at each side of the said throat or of the said annular space.

8. Pneumatic secateurs according to any one of claims 1 to 7, comprising two driving pistons (10, 12) disposed and adapted to slide in fluid-tight manner in the body (1) and a fixed retaining piston (15) mounted between the said driving pistons comprising a primary piston (10) the rod (9) of which is coupled to the pivoting blade and a secondary piston (12) mounted about the said rod and in front of the said primary piston, the rear faces of the said driving pistons bounding two chambers (C3, C4) capable of being placed simultaneously open to atmosphere or in pressure by means of the distributor and an appropriate circuit, whilst the rear face of the primary piston bounds a third chamber (C2) adapted to be placed under pressure or opened to atmosphere by means of the said distributor, characterised in that the secondary piston (12) is fast with a rod (11) surrounding the rod (9) of the primary piston (10) and the free end of which is placed in contact against the front face of the said primary piston, the said rod ot the secondary piston sliding, in fluid-tight manner, in the retaining piston (15).

9. Pneumatic secateurs, according to claim 8, of which the rod (9) of the primary piston (10) comprises, in its rear part, a blind hole near to the bottom of which open radial apertures (20), characterised in that the passage which provides a communication between the distributor and the chambers bounded by the front faces of the driving pistons comprises:

— the bore of a hollow rod (17) on which slides, in fluid-tight manner, the rod (9) of the primary piston, the said hollow rod (17) being mounted fixedly in a recess (19) formed in the rear part of the body and communicating with the recess in which is installed the distributor;
— an annular space (e1) formed between the rods (9, 11) of the primary piston (10) and the secondary piston (12);
— ports (11a) with which the rear extremity of the rod of secondary piston is provided.

10. Pneumatic secateurs according to one of claims 8 or 9, of which the primary piston (10) slides in a longitudinal bore formed in the body of the said secateurs, characterised in that the secondary piston (12) slides in the bore of a cylinder (13) disposed coaxially in the said body and against which is butted the retaining piston (15), an annular space (e2) being formed between the said body and the said cylinder the rear end of which is provided with windows (16) communicating with the said space into which there also opens an orifice (14), comprised in the said body, for communication with atmosphere.

Fig.1

Fig.2

Fig.3

Fig.4

0 013 656

Fig.5